# NEUE EUROPÄISCHE PATENTSCHRIFT

(11) **EP 0 330 839 B2**
(45) Veröffentlichungstag und Bekanntmachung des Hinweises auf die Entscheidung über den Einspruch: **04.10.1995**
(45) Hinweis auf die Patenterteilung: 11.12.1991
(21) Anmeldenummer: 89101318.7
(22) Anmeldetag: 26.01.1989
(51) Int. Cl.: A01C 17/00

(54) **Schleuderstreuer**
Fertilizer broadcaster
Epandeur centrifuge

(30) Priorität: 05.02.1988 DE 3803408
(43) Veröffentlichungstag der Anmeldung: 06.09.1989
(73) Patentinhaber: Amazonen-Werke H. Dreyer GmbH & Co. KG, D-49205 Hasbergen (DE)
(72) Erfinder: Dreyer, Heinz, Dr., D-4507 Hasbergen (DE)
(74) Vertreter: Schuster, Thomas, Dipl.-Phys.

(56) Entgegenhaltungen:
- EP-A- 0 222 337
- DE-A- 2 031 557
- DE-A- 2 843 487
- DE-A- 3 617 302
- DE-C- 3 427 367
- FR-A- 2 281 795

## Beschreibung

Die Erfindung betrifft einen Schleuderstreuer zum Ausbringen von Dünger nach dem Oberbegriff des Anspruchs 1.

Ein derartiger Schleuderstreuer ist in der deutschen Offenlegungsschrift 36 17 302 beschrieben. Die Dosierorgane dieses Schleuderstreuers sind auf einfachste Weise derart eingestellt, daß sich der auszubringende Dünger entsprechend der Nährstoffversorgung der zu bestreuenden Flächen verteilen läßt. Hierzu sind die Einstellorgane für die Dosierorgane dieses Schleuderstreuers mit einer elektronischen Einstellvorrichtung verbunden, die einen die momentane Ausbildung charakteristischen Wert erfaßt und aufgrund dieses Wertes die Ausbringorgane automatisch entsprechend des vorgegebenen Sollwertes einstellt. Dieses Ein- bzw. Verstellen der gewünschten Ausbringmenge ist bei der Ausbringung der Dosierorgane dieses Schleuderstreuers als Dosierräder mit einer gleichzeitigen Verstellung des Aufgabepunktes des auf die Schleuderscheiben auftreffenden Düngermittellstromes aus dem Vorratsbehälter gekoppelt. Diese Verstellung des Aufgabepunktes, in Abhängigkeit der Ausbringmenge, wird durch zwischen den Dosierorganen und den Schleuderscheiben angeordneten Leitelementen herbeigeführt und bewirkt, daß die Lage des Streusektors, über den die Materialpartikel abgeschleudert werden, unverändert beibehalten wird, d.h. damit die Lage des Streusektors sich nicht verändert. Des weiteren werden durch das Antreiben der Schleuderscheiben m it unterschiedlichen Drehzahlen die Möglichkeit zur Anpassung an die jeweiligen Einsatzverhältnisse vergrößert. Eine Abhängigkeit zwischen der Veränderung der schleuderscheibenantriebsdrehzahl und der Verstellung des Aufgabepunktes des auf die Schleuderscheibe auftreffenden Materialstromes ist nicht vorgesehen.

Des weiteren ist durch die EP-0170605 A1 ein Schleuderstreuer mit zwei als Schleuderscheiben ausgebildeten Verteilorganen bekannt. Diesen Schleuderscheiben werden die sich in dem Vorratsbehälter befindlichen Düngemittel jeweils über ein, von einem auf der Bodenoberfläche abrollenden Antriehbsrad angetriebenen Förderbändern in einstellbaren Mengen zugeführt. Die jeweilige Wurfweite der Schleuderscheiben dieses Schleuderstreuers wird über die zwischen dem jeweiligen Förderband und der jeweiligen Schleuderscheibe angeordneten, in verschiedenen Positionen einstellbaren Rutsche eingestellt. Das Verstellen der Rutsche erfolgt von Hand und bewirkt eine Veränderung des Aufgabepunktes des auf die Schleuderscheiben auftreffenden Matrials, wodurch die Wurfweite beeinflußt wird. Die Verstellung des Aufgabepunktes vom Schleppersitz aus ist nicht vorgesehen und auch nicht möglich.

In der EP-A-278251 (wobei es sich um einen Stand der Technik nach Artikel 54(3) EPÜ handelt) ist ein Schleuderstreuer beschrieben, bei dem über eine Drehzahlveränderungseinrichtung die Drehzahl der Schleuderscheiben einstellbar ist, so daß sich die Streubreite stufenlos einstellen läßt. Weiterhin wird das Düngermaterial auf die Schleuderscheiben jeweils auf eine Aufgabefläche bzw. Aufgabepunkt aufgegeben, wobei über eine Fernbedienungsvorrichtung die Lage der Aufgabefläche auf der jeweiligen Schleuderscheibe veränderbar ist. Durch die Verstellung der Lage der Aufgabefläche soll bei diesem Schleuderdüngerstreuer erreicht werden, daß der sog. Mengeneffekt verhindert wird.

Durch die DE-OS 25 04 725 ist bereits eine Vorrichtung zum wegabhängigen Streuen körniger Stoffe bekannt, wobei diese Vorrichtung an Fahrzeugen anbringbar ist. Diese Vorrichtung ist mit einem Streugerät versehen, welches eine elektronische Logikschaltung beinhaltet, die durch Multiplikation der Störgrößenänderungen, nämlich Streudichte, Streubreite und der über einen Tachogenerator kontrollierten Fahrgeschwindigkeit das Streugut wegabhängig abgibt. Die Streuvorrichtung weist zum Verteilen des Streumaterials eine Schleuderscheibe auf, wobei die Streubreite durch unterschiedliche Antriebsdrehzahlen der Schleuderscheiben innerhalb der Gesamtstreubreite stufenlos einstellbar ist. Eine Veränderung der Streubreite bewirkt automatisch eine proportionale Änderung der Streumenge, so daß die gewünschte Ausbringmenge pro Flächeneinheit immer konstant gehalten wird.

Versuche haben jedoch gezeigt, daß sich die Streubreite bei einem Schleuderstreuer zum Verteilen von Düngemitteln beim Grenzstreuen nicht nur durch eine Veränderung der Antriebsdrahzahl der jeweiligen, dem Feldrand zugewandten Schleuderscheibe verändern läßt, da sich die Querverteilung innerhalb der reduzierten Streubreite der betreffenden Schleuderscheibe mit der Scheibendrahzahländerung ändert und sich so ohne weiteres keine steil abfallenden Streuflanken erzeugen lassen, so daß es zu keiner gleichmäßigen Querverteilung im Grenzbereich am Feldrand kommt und die Düngemittelpartikel über den Feldrand hinausgeworfen werden.

Der Erfindung liegt nun die Aufgabe zugrunde, den gattungsgemäßen Schleuderstreuer derart weiterzuentwickeln, daß sich die Wurfweiten und/oder das Streubild auf einfache Weise vom Schleppersitz aus ein- und verstellen läßt, wobei insbesondere bei gleichbleibend gleichmäßiger Querverteilung auch ein Grenzstreuen mit steil abfallender Flanke ermöglicht werden soll.

Diese Aufgabe wird erfindungsgemäß durch die Maßnahme gemäß des Kennzeichens des Patentanspruchs 1 gelöst. Infolge dieser Maßnahmen läßt sich in überraschend einfacher Weise die Wurfweite des Schleuderstreuers verändern und an gegebene Einsatzbedingungen anpassen.

Durch die genaue Einstellung der Aufgabefläche bzw. des Aufgabepunktes des Düngers auf die jeweilige Schleuderscheibe vom Schleppersitz aus, wird bei einer Veränderung der Drehzahl der Schleuderscheiben - wodurch eine Änderung der Arbeitsbreite möglich ist - eine gleichmäßige Querverteilung des Düngers bei dieser geänderten Arbeitsbreite gewährleistet. Des weiteren ist es möglich, durch die Veränderung der Aufgabefläche bzw. des Aufgabepunktes des Düngers auf die jeweilige Schleuderscheibe in Verbindung mit der Drehzahländerung der Schleuderscheibe sowohl ein steil abfallendes wie ein flach abfallendes Streubild im Randbereich zu erzielen. Hierdurch ist es möglich, vom Schleppersitz aus den Schleuderstreuer auf das Grenzstreuen mit einer steil abfallenden Randflanke in der Querverteilung einzustellen, so daß bis an den Feldrand heran der Dünger mit einer gleichmäßigen Querverteilung verteilt wird, ohne daß in merklichen Maßen Dünger über den Feldrand hinausgeworfen wird. Somit ist es also möglich, über die Fernbedienungsvorrichtung die Querverteilung und die Arbeitsbreite vom Schleppersitz aus den gegebenen Verhältnissen anzupassen. Selbstverständlich muß bei einer Verringerung der Arbeitsbreite berücksichtigt werden, daß auch die Ausbringmenge gleichzeitig verringert wird bzw. bei einer Vergrößerung der Ausbringmenge, daß im gleichen Verhältnis die Ausbringmenge vergrößert wird, so daß pro bestreuter Flächeneinheit weiterhin eine konstante Menge Dünger ausgebracht wird.

Des weiteren ist in einer bevorzugten Ausführung vorgesehen, daß der Aufgabepunkt des Düngers auf die jeweilige Schleuderscheibe mit Hilfe von Fernbedienungsvorrichtungen derart vom Schleppersitz veränderbar ist, daß die Maschine sowohl auf das "Normalstreuen" als auch auf einseitiges oder doppelseitiges "Grenzstreuen" einstellbar ist. Hierdurch läßt sich in überraschend einfacher Weise das Ausbringen des Düngers mit dem Schleuderstreuer auf jeden Einsatzfall in einfacher Weise einstellen. Somit kann also vom Schleppersitz aus über die Fernbedienungsvorrichtung die Maschine auf die jeweils gewünschte Arbeitsweise eingestellt werden.

Des weiteren ist erfindungsgemäß vorgesehen, daß die den Aufgabepunkt des Düngers auf die jeweilige Schleuderscheibe bestimmenden Bauteile während des Streuvorganges in Stufen und/oder stufenlos ein- und verstellbar sind. Somit kann das Ausbringen des Düngers den jweiligen Verhältnissen stufenlos angepaßt werden. Dieses ist vor allen Dingen wichtig, wenn der Dünger auf spitz oder schräg zulaufenden Feldern ausgebracht werden soll. Es ist also ein Grenzstreuen möglich, welches vom Schleppersitz aus eingestellt werden kann. Außerdem ist es selbstverständlich auch möglich, vom Schleppersitz aus die Maschine vom Grenzstreuen wieder auf Normalstreuen umzustellen.

Weiterhin ist erfindungsgemäß vorgesehen, daß eine elektronische Regel- und/oder Steuervorrichtung vorgesehen ist, mittels welcher die Fernbedienungsvorrichtung für die Aufgabepunktveränderung ein- und/oder verstellbar ist. Durch diese Maßnahme wird es in einfachster Weise möglich, das Ausbringen des Düngers den jeweiligen Verhältnissen entsprechend zu automatisieren, wobei dann in die elektkronische Regel- und/oder Steuervorrichtung die entsprechenden Werte eingegeben werden. Beispielsweise kann eine bestimmte Grenzstreuweite in diese Vorrichtung eingegeben werden und selbständig wird der entsprechende Aufgabepunkt verändert, so daß die gewünschte Wurfweite und die gewünschte Querverteilung bzw. die gewünschte Randverteilung (flach oder steil abfallender Randbereich) erreichbar ist.

Des weiteren sieht die Erfindung vor, daß die Drehzahl der jeweiligen Schleuderscheibe über eine Fernbedienungsvorrichtung ein- und/oder verstellbar ist. Hierdurch können unterschiedliche Wurfweiten und somit unterschiedlich breite Feldrandstreifen bestreut werden, wobei diese Einstellung dann über die Fernbedienungsvorrichtung direkt vom Schleppersitz aus vornehmbar ist. In vorteilhafter Weise sind hier die Drehzahlen der jeweiligen Schleuderscheiben stufenlos veränderbar, wobei insbesondere die jeweiligen Drehzahlen der Schleuderscheiben unabhängig voneinander einstellbar sind. Diese Drehzahländerung erfolgt in bevorzugter Weise über eine elektronische Regel- und/oder Steuervorrichtung, so daß lediglich in dieser Steuervorrichtung die entsprechenden Werte eingegeben werden müssen, so daß dann automatisch die gewünschte Wurfweite erreichbar ist.

Hierbei sieht die Erfindung in bevorzugter Weise vor, daß in der elektronischen Regelvorrichtung Funktionskurven und -daten eingespeichert sind, nach denen die gewünschte Änderung des Streubildes durch die Drehzahländerung und/oder Aufgabepunktänderung, um die Streubreite zu verändern - mit und ohne Veränderung der Streumenge pro Flächeneinheit - sowie die Streustärke am Rand der Arbeitsbreite entsprechend den Gegebenheiten - "Grenzstreuen" oder "Normalstreuen" mit "steil abfallenden Streubildflanken" oder "allmählich abfallenden Streubildflanken" - einstellen zu können, erfolgt.

Weitere Einzelheiten der Erfindung sind der Beispielsbeschreibung und den Zeichnungen zu entnehmen.
Hierbei zeigt:

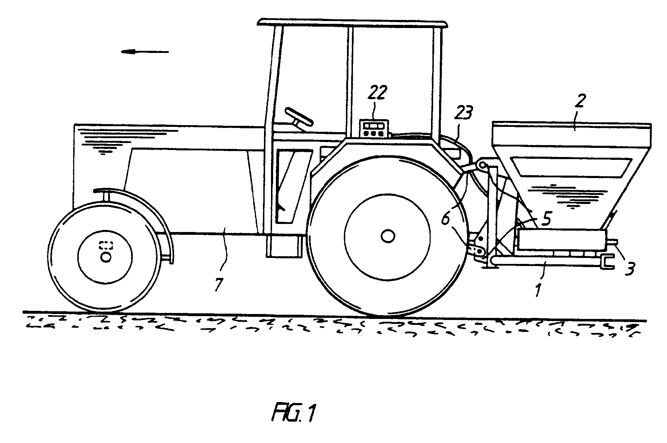

- Fig. 1: den in erfindungsgemäßer Weise ausgebildeten Schleuderstreuer angehängt an einen Ackerschlepper in der Seitenansicht,
- Fig. 2: den in erfindungsgemäßer Weise ausgebildeten Schleuderstreuer in der Ansicht von hinten,
- Fig. 3: der in erfindungsgemäßer Weise ausgebildete Schleuderstreuer in der Position "Normalstreuen",
- Fig. 4: das vom Schleuderstreuer gemäß Fig. 3 erzeugte Streubild,
- Fig. 5: der in erfindungsgemäßer Weise ausgebildete Schleuderstreuer in der Position "Grenzstreuen",
- Fig. 6: das vom Schleuderstreuer gemaß Fig. 5 erzeugte Streubild,
- Fig. 7: das Streubild eines schmaleren Grenzstreifens und
- Fig. 8: das Streubild eines in bezug auf Fig. 8 noch schmalerer Grenzstreifen.

Der Schleuderstreuer weist den Rahmen 1, den Vorratsbehälter 2 sowie die Schleuderscheiben 3 mit den Wurfelementen 4 auf. Auf der Vorderseite des Rahmens 1 sind die Dreipunktkupplungselemente 5 angeordnet, über welche der Schleuderstreuer an den Dreipunktkraftheber 6 eines Ackerschleppers 7 anzuordnen ist. Die als Schleuderscheiben 3 ausgebildeten Verteilorgane werden von den Hydraulikmotoren 8 und 9 angetrieben. In den unteren Teilen des Vorratsbehälters sind die als Nockenwalzen 10 und 11 ausgebildeten Dosierorgane angeordnet. Die Nockenwalze 10 wird von dem als Hydraulikmotor 12 ausgebildeten Antriebsorgan angetrieben, während das Dosierorgan 11 von dem als Hydraulikmotor 13 ausgebildet Antriebsorganen angetrieben wird. Die Hydraulikmotoren 8, 9, 12 und 13 sind über Leitungen an die Hydraulikanlage des Schleppers angeschlossen. An den Hydraulikmotoren 8, 9, 12 und 13 sind noch zusätzlich dargestellte Regelorgane 14, 15, 16, 17 mit Regelventilen etc. angeordnet. Über die Regelventile 14, 15 lassen sich die Drehzahlen der Hydraulikmotore 8 und 9 einstellen und regulieren. Ebenfalls lassen sich über die entsprechenden Regelventile 16, 17 oder andere Steuerventile die Drehzahlen der Hydraulikmotoren 12 und 13 einstellen und regulieren, wodurch die Ausbringmenge pro Fläche einzustellen ist. Unterhalb der Dosierorgane 10 und 11 sind die Auslaufrutschen 18 und 19 angeordnet. Die Auslaufrutschen 18 und 19 sind über die als Elektromotore ausgebildeten Verstellorgane 20 und 21 zu verschieben, so daß sich hierdurch der Aufgabepunkt bzw. die Aufgabefläche des von den Dosierorganen 10 und 11 aus dem Vorratsbehälter dosierten Materiales auf die jeweilige Schleuderscheibe 3 einstellen bzw. verändern läßt.

Auf dem Schlepper 7 ist die elektronische Regel- und Steuervorrichtung 22 angeordnet. Diese elektronische Steuereinrichtung 22 ist über das Kabel 23 mit den Regelventilen und Regeleinrichtungen 14, 15, 16, 17 der Hydraulikmotore 8, 9, 12, 13 sowie den Verstellvorrichtungen 20 und 21 verbunden. Über die Regeleinrichtung 22 lassen sich somit die Drehzahlen der Hydraulikmotoren 8 und 9 und somit der Schleuderscheiben 3 einstellen. Des weiteren lassen sich die Drehzahlen der Hydraulikmotoren 12 und 13 und somit die von den Dosierorganen 10 und 11 geförderte Menge Dünger, welche sich im Vorratsbehälter 2 befindet, auf die Schleuderscheiben 3 dosieren. Ebenfalls läßt sich über die Regelvorrichtung 22 der Aufgabepunkt bzw. die Aufgabefläche des Düngers auf den Schleuderscheiben 3 durch das Verstellen der Auslaufrutschen 18 und 19 über die Verstelleinrichtung 20 und 21 erreichen. Somit ist also über die als Fernbedienungsvorrichtung ausgebildete Regel- und Steuereinrichtung 22 vom Schleppersitz aus der Aufgabepunkt bzw. die Aufgabefläche des Düngers auf die jeweilige Schleuderscheibe 3 zu verändern.

Hierbei ist der Aufgabepunkt bzw. die Aufgabefläche des Düngers auf die jeweilige Schleuderscheibe 3 während des Streuvorganges in Stufen oder stufenlos über die Regel- und Steuereinrichtung 22 zu verstellen, indem die Auslaufrutschen 18 und 19 über die Einrichtungen 20 und 21 verstellt werden. Hierbei können diese beiden Auslaufrutschen 18 und 19 gleichzeitig oder auch unabhängig voneinander verändert werden.

Des weiteren ist die Drehzahl der Schleuderscheiben 3 über die Hydraulikmotoren 8 und 9 stufenlos gleichzeitig oder aber die Drehzahlen der Schleuderscheiben 3 sind auch unabhängig voneinander einstellbar. Dieses geschieht ebenfalls wieder über die als Fernbedienungsvorrichtung ausgebildete Regel- und Steuereinrichtung 18 in Verbindung mit den den Hydraulikmotoren 8 und 9 zugeordneten Regelventilen 14 und 15.

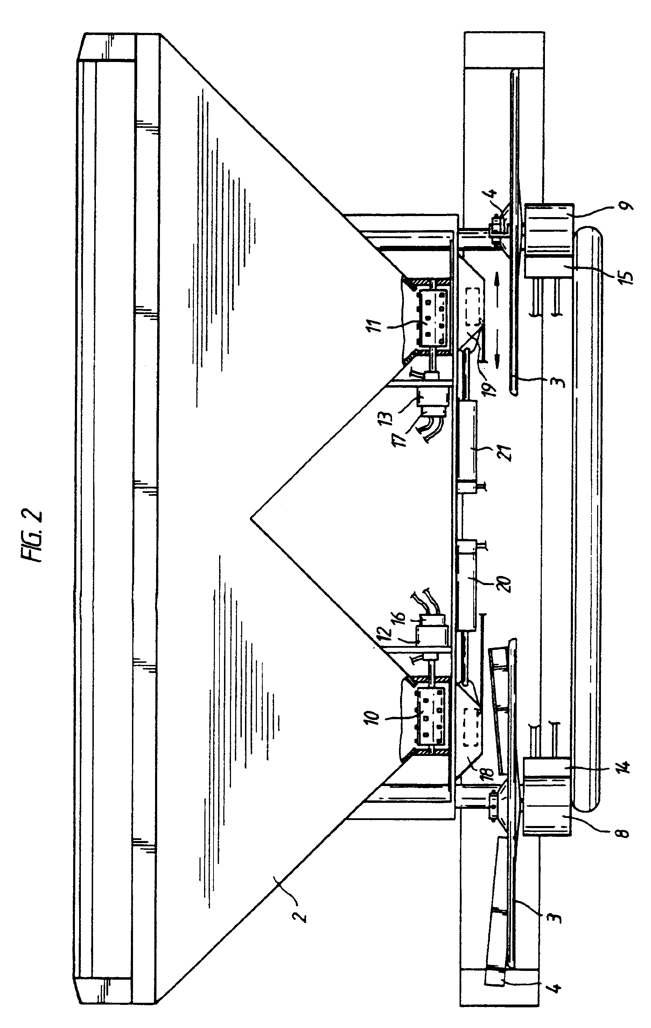

In der elektronischen Regel- oder Steuervorrichtung 22 ist die Aufgabepunkt- bzw. Aufgaberflächenveränderung des Düngers auf die Schleuderscheiben 3 über die Auslaufrutschen 18 und 19 sowie die Drehzahländerung für die Schleuderscheiben 3 miteinander verknüpft. In der elektronischen Regel- und Steuervorrichtung 22 sind Funktionskurven und -daten eingespeichert, nach denen die gewünschte Änderung des Streubildes durch die Drehzahländerung und/oder Aufgabepunktänderung (Aufgabeflächenveränderung), um die Streubreite zu ändern―mit und ohne Veränderung der Streumenge pro Flächeneinheit―sowie die Streustärke am Rand der Arbeitsbreite entsprechend den Gegebenheiten―"Grenzstreuen" oder "Normalstreuen" mit "steil abfallenden Streubildflanken" oder "allmählich abfallenden Streubildflanken"―einstellen zu können. Dieses soll anhand der Fig. 3 bis 8 noch näher erläutert werden.

In Fig. 3 sind schematisch die äußersten Wurfbahnen der Dungemittelpartikel dargestellt, welche von den Wurfelementen 4 der Schleuderscheiben 3 abgeschleudert werden. Fig. 3 zeigt schematisch die äußersten Wurfbahnen für das "Normalstreuen". In Fig. 4 ist das Streubild, welches durch den Schleuderstreuer gemäß Fig. 3 erzielt wird, mit durchzogenen Linien dargestellt. Dieses Streubild 24 weist die Streustärke 25 mit den flach abfallenden Randbereichen 26 und 27 auf. Durch entsprechendes Überlappen der benachbarten Streubilder 8 und 29 der benachbarten Streubahnen ergibt sich über die gesamte zu bestreuende Fläche eine gleichmäßige Streustärke. D.h., der Dünger wird über die gesamte Fläche gleichmäßig verteilt.

Soll nun der Dünger entsprechend der Fig. 5 auf der durch den Graben 30 begrenzten Feldrand 31 und bis an den Feldrand in annähern gleichmaßiger Streustärke herangeworfen werden, so wird die Drehzahl der dem Feldrand 31 zugewandten Schleuderscheibe 3 über die Regeleinrichtung 22 entsprechend der vorprogrammierten Daten reduziert, so daß der Dünger entsprechend der Wurfbahn 32 bis an den Feldrand 31 im äußeren Bereich herangeworfen wird. Auf der dem Feldrand abgewandten Seite wird die Schleuderscheibe 3 mit der normalen Drehzahl für das Normalstreuen angetrieben.

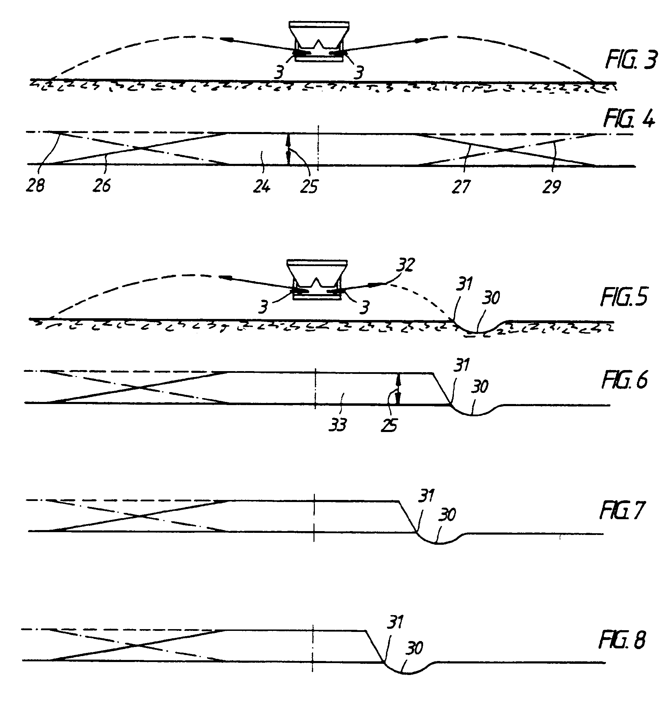

In Fig. 6 ist das von dem Schleuderstreuer gemäß Fig. 5 erzielte Streubild 33 schematisch dargestellt. Der Dünger wird praktisch bis an den Feldrand 31 mit der gleichmäßigen Streustärke 25, die sich über das gesamte zu bestreuende Feld erstreckt, herangeworfen. Damit das Streubild bzw. der Dünger in gleichmäßiger Streustärke über die gesamte Arbeitsbreite ausgebracht wird, ist es zusätzlich noch erforderlich, daß auf der dem Feldrand zugewandten Seite die Aufgabefläche bzw. der Aufgabepunkt des Düngers auf der dem Feldrand zugewandten Schleuderscheibe 3 verändert wird. Hierzu wird dann über die Regel- und Steuereinrichtung 22 entsprechend mittels der Einrichtung 21 die Auslaufrutsche 19 verstellt. Ebenfalls muß die Ausbringmenge entsprechend der Grenzstreubreite, d.h. dem Abstand von der Schleuderstreuermitte bis zur Feldrandgrenze angepaßt werden, so daß der Dünger in der genau gewünschten Ausbringmenge pro Flächeneinheit ausgebracht und die zu bestreuenden Grenzstreubereiche entsprechend bestreut werden.

Gemäß Fig. 7 ist ein schmalerer Grenzstreifen als in Fig. 6 zu bestreuen. Für diesen Fall ist dann die Drehzahl der dem Feldrand 31 zugewandten Schleuderscheibe weiter zu reduzieren und ebenfalls der Aufgabepunkt zu verändern, so daß eine gleichmäßige Querverteilung des Düngers erreicht wird. Ebenfalls ist, da der zu bestreuende Streifen schmaler geworden ist und damit der Dünger nicht in größerer Menge pro Flächeneinheit auf dem Grenzstreifen verteilt wird, die Ausbringmenge, die der dem Feldrand 31 zugewandten Schieuderscheibe 3 zudosiert wird, zu reduzieren. Dieses geschieht dadurch, daß die Drehzahl des Hydraulikmotors 13 und somit die Drehzahl des Dosierrades 11 verringert wird.

Um den noch schmaleren Feldrandstreifen gemäß Fig. 8 mit einer gleichmäßigen Streustärkte und in gleichmäßiger Querverteilung, wie auf dem übrigen zu bestreudenden Feld zu bestreuen, ist hier die Drehzahl der Schleuderscheibe 3, die dem Feldrand 31, zugewandt ist, noch weiter zu reduzieren. Ebenfalls ist es erforderlich, den Aufgabepunkt bzw. die Aufgabefläche des Düngers auf die Schleuderscheibe entsprechend der vorprogrammierten Daten, die in den Rechner 22 eingegeben sind, zu verändern. Ebenfalls muß die Düngermenge, die der Schleuderscheibe 3 zudosiert wird der noch zu bestreuenden Feldrandstreubreite angepaßt werden, damit hier genau die Düngermenge pro Flächeinheit ausgebracht wird, die auch über der übrigen zu bestreuenden Feld bzw. in der gewünschten Größe ausgebracht wird.

Diese Änderung der zu bestreuenden Grenzstreubreite bzw. Anpassung der Düngerausbringung kann in Stufen oder stufenlos erfolgen. Hierbei können diese Werte dann beispielsweise manuell in die Steuer- und Regelvorrichtung 22 eingegeben werden. Es ist jedoch auch möglich, diese Werte nach einer Tabelle von Hand an den entsprechenden Regelventilen und Regeleinrichtungen 14, 15, 16, 17 einzustellen.

Auch ist es möglich, mit einer stufenlosen und kontinuierliche Änderung der Drehzahl der Scheiben der Düngeraufgabefläche entsprechend einer sich verändernden bzw. verringernden oder verbreiternden Grenzstreuweite die Wurfweite des Düngers und die Querverteilung des Düngers stufenlos anzupassen, wobei dann diese Änderung automatisch über die Steuer- und Regeleinrichtung 22 erfolgen kann.

## Patentansprüche

1. Schleuderstreuer zum Ausbringen von Dünger mit einem Vorratsbehälter (2) und mit mindestens zwei mit Wurfelementen (4) ausgerüsteten und rotierend angetriebenen Schleuderscheiben (3), denen das auszubringende und sich im Vorratsbehälter (2) befindliche Material über im unteren Bereich des Vorratsbehälters (2) angeordnete Dosierorgane (11) zuführbar ist, wobei über eine Drehzahlveränderungseinrichtung (14, 15, 16, 17) die Schleuderscheiben (3) mit unterschiedlichen Drehzahlen antreibbar sind, wobei das Düngermaterial auf die Schleuderscheiben (3) jeweils auf eine Aufgabefläche bzw. Aufgabepunkt aufgebbar ist und über eine Fernbedienungsvorrichtung (20, 21, 22) die Lage der Aufgabeflächen auf den Schleuderscheiben (3) vom Schleppersitz aus über eine Regel- und/oder Steuereinrichtung veränderbar ist, **dadurch gekennzeichnet,**
- daß die Drehzahlen der Schleuderscheiben unabhängig voneinander einstellbar sind,
- die Lage der Aufgabefläche bzw. des Aufgabepunktes für jede Schleuderscheibe unabhängig von der anderen Schleuderscheibe veränderbar ist und
- daß die Aufgabeflächenveränderung mit der Drehzahländerung der Schleuderscheiben (3) in der Regel- und/oder Steuereinrichtung (22) verknüpft ist.

2. Schleuderstreuer nach Anspruch 1, **dadurch gekennzeichnet,** daß der Aufgabepunkt des Düngers auf die jeweilige Schleuderscheibe (3) mit Hilfe von Fernbedienungsvorrichtungen (20, 21, 22) derart vom Schleppersitz aus veränderbar ist, daß die Maschine sowohl auf das "Normalstreuen" als auch auf einseitiges oder doppelseitiges "Grenzstreuen" einstellbar ist.

3. Schleuderstreuer nach Anspruch 1 und 2, **dadurch gekennzeichnet,** daß die den Aufgabepunkt des Düngers auf die jeweilige Schleuderscheibe (3) bestimmenden Bauteile (18, 19) während des Streuvorganges in Stufen und/oder stufenlos ein- und verstellbar sind.

4. Schleuderstreuer nach Anspruch 2, **dadurch gekennzeichnet,** daß eine elektronische Regel- und/oder Steuervorrichtung (22) vorgesehen ist, mittels welcher die Fernbedienungsvorrichtung (20, 21) für die Aufgabepunktveränderung ein- und/oder verstellbar ist.

5. Schleuderstreuer nach Anspruch 1 und 2, **dadurch gekennzeichnet,** daß die Drehzahl der jeweiligen Schleuderscheibe (3) über eine Fernbedienungsvorrichtung (14, 15) ein- und/oder verstellbar ist.

6. Schleuderstreuer nach Anspruch 5, **dadurch gekennzeichnet,** daß die Drehzahl der Schleuderscheiben (3) stufenlos veränderbar ist.

7. Schleuderstreuer nach Anspruch 5 oder 6, **dadurch gekennzeichnet,** daß eine elektronische Regel- und/oder Steuervorrichtung (22) vorgesehen ist, mittels welcher die Fernbedienungsvorrichtung (14, 15) für die Drehzahländerung und/oder -einstellung bedienbar ist.

8. Schleuderstreuer nach Anspruch 4 und 7, **dadurch gekennzeichnet,** daß in der elektronischen Regelvorrichtung (22) Funktionskurven und -daten eingespeichert sind, nach denen die gewünschte Änderung des Streubildes (24, 28, 29, 33) durch die Drehzahländerung und/oder Aufgabepunktänderung, um die Streubreite zu verändern - mit und ohne Veränderung der Streumenge pro Flächeneinheit - sowie die Streustärke (25) am Rand der Arbeitsbreite entsprechend den Gegebenheiten - "Grenzstreuen" oder "Normalstreuen" mit "steil abfallenden Streubildflanken" oder "allmählich abfallenden Streubildflanken" - einstellen zu können, erfolgt.

## Claims

1. A centrifugal distributor for distributing fertilisers, with a hopper (2) and with at least two rotarily-driven centrifugal discs (3), equipped with throwing elements (4), and to which the material to be distributed, located in the hopper (2), is transportable through the metering units (11) disposed in the lower region of the hopper (2), the centrifugal discs (3) being drivable at different speeds by means of a speed-varying means (14, 15, 16, 17), the fertiliser material being transportable on to the centrifugal discs (3) on to a respective delivery surface or delivery point, a remote control (20,21,22) allows the position of the delivery surfaces on the centrifugal discs (3) being alterable from the tractor seat by means of a regulating and/or control device, characterised in that
- the rotational speeds of the centrifugal discs are adjustable independently of one another,
- the position of the delivery surface or delivery point for each centrifugal disc is alterable independently of the other centrifugal disc, and
- the alteration in delivery surface is interrelated with the alteration in rotational speed of the centrifugal discs (3) in the regulating and/or control device (22).

2. A centrifugal distributor according to Claim 1, characterised in that the delivery point of the fertiliser on the respective centrifugal disc (3) is alterable from the tractor seat with the help of remote-control devices (20, 21, 22) in such a way that the machine is adjustable both to "normal distribution" and to one-sided or double-sided "edge distribution".

3. A centrifugal distributor according to Claims 1 and 2, characterised in that the components (18, 19) determining the delivery point of the fertiliser on the respective centrifugal disc (3) are settable and displaceable during the distribution procedure in stages and/or in an infinitely variable manner.

4. A centrifugal distributor according to Claim 2, characterised in that an electronic regulating and/or control device (22) is provided, by means of which the remote control device (20, 21) for altering the delivery point can be set and displaced.

5. A centrifugal distributor according to Claims 1 and 2, characterised in that the rotational speed of the respective centrifugal disc (3) can be set and/or displaced via a remote control device (14, 15).

6. A centrifugal distributor according to Claim 5, two centrifugal discs being provided, characterised in that the rotational speed of the centrifugal discs (3) is infinitely variable.

7. A centrifugal distributor according to Claim 5 or 6, characterised in that an electronic regulating and control device (22) is provided, by means of which the remote control device (14, 15) for altering and/or setting the rotational speed may be operated.

8. A centrifugal distributor according to Claims 4 and 7, characterised in that the function curves and data are stored in the electronic regulating device (22), according to which the desired alteration in the scatter pattern (24, 28, 29, 33) is effected by variation in rotational speed and/or delivery point, in order to change the scatter width - with and without alteration in the distributed amount per unit of surface area - and the scatter density (25) at the edge of the working width, can be set in accordance with the data - "edge distribution" or "normal distribution" with "steeply declining edges of the scatter pattern" or "gradually declining edges of the scatter pattern".

## Revendications

1. Epandeur centrifuge pour distribuer de l'engrais, comprenant un réservoir (2) et au moins deux disques d'épandage (3), entraînés en rotation, équipés de deux éléments d'éjection (4), ces disques recevant le produit à distribuer, contenu dans le réservoir (2), par l'intermédiaire d'organes de dosage (11) prévus dans la zone inférieure du réservoir d'alimentation (2), une installation de variation de vitesse de rotation (14, 15, 16, 17) entraînant les disques d'épandage (3) à des vitesses de rotation différentes, l'engrais étant fourni aux disques d'épandage (3) suivant chaque fois une surface ou un point d'émission et un dispositif de télécommande (20, 21, 22) permet de modifier la position des surfaces d'émission sur les disques d'épandage (3) à partir du siège du conducteur par l'intermédiaire d'une installation de réglage et/ou de commande, caractérisé en ce que :
- la vitesse de rotation des disques d'épandage se règle indépendamment,
- la position du point ou de la surface d'émission de chaque disque d'épandage est variable indépendamment de l'autre disque,
- la variation de la surface d'émission avec la vitesse de rotation des disques d'épandage (3) est combinée dans une installation de régulation et/ou de commande (22).

2. Epandeur centrifuge selon la revendication 1, caractérisé en ce que le point d'émission de l'engrais sur le disque d'épandage respectif (3) peut être modifié à l'aide de dispositifs de télécommande (20, 21, 22) à partir du siège du conducteur pour que la machine puisse être réglée en 〈〈 épandage normal 〉〉 ou en 〈〈 épandage en limite 〉〉 d'un côté ou des deux côtés.

3. Epandeur centrifuge selon la revendication 1 et 2, caractérisé en ce que les pièces (18, 19) qui définissent le point d'émission de l'engrais sur le disque d'épandage (3) respectif peuvent être réglées et modifiées pendant l'opération d'épandage, suivant des échelons et/ou de manière continue.

4. Epandeur centrifuge selon la revendication 2, caractérisé par un dispositif de régulation et/ou de commande (22) électronique qui permet de régler et/ou de modifier le point d'émission à l'aide du dispositif de télécommande (20, 21).

5. Epandeur centrifuge d'engrais selon les revendications 1 et 2, caractérisé en ce que la vitesse de rotation de chaque disque d'épandage (3) se règle ou se modifie par un dispositif de télécommande (14, 15).

6. Epandeur centrifuge selon la revendication 5, caractérisé en ce que la vitesse de rotation des disques d'épandage (3) est réglable en continu.

7. Epandeur centrifuge selon la revendication 5 ou 6, caractérisé par un dispositif de régulation et/ou de commande (22) électronique qui permet de servir le dispositif de commande (14, 15) pour la variation et/ou le réglage de la vitesse de rotation.

8. Epandeur centrifuge selon les revendications 4 et 7, caractérisé en ce que le dispositif de régulation électronique (22) contient en mémoire des données et des courbes de fonctionnement suivant lesquelles on assure la modification souhaitée de l'image d'épandage (24, 28, 29, 33) par variation de la vitesse de rotation et/ou variation du point d'émission, pour modifier la largeur d'épandage (avec ou sans modification de la quantité de produit distribué par unité de surface) ainsi que l'intensité d'épandage (25) au bord de la largeur de travail en fonction des données 〈〈 épandage en limite 〉〉 ou 〈〈 épandage normal 〉〉 avec 〈〈 des flancs chutant rapidement de l'image d'épandage 〉〉 ou 〈〈 des flancs de l'image d'épandage qui descendent progressivement 〉〉.
